# FASCICULE DE BREVET EUROPEEN

(11) **EP 1 978 848 B1**
(45) Date de publication et mention de la délivrance du brevet: **22.07.2009**
(21) Numéro de dépôt: 07730905.2
(22) Date de dépôt: 01.02.2007
(51) Int. Cl.: A47J 27/04

(54) **ENSEMBLE POUR LA CUISSON A LA VAPEUR, COMPORTANT DES PANIERS DE CUISSON JUXTAPOSES**
DAMPFKOCHSET MIT NEBENEINANDER ANGEORDNETEN GARKÖRBEN
STEAM COOKING SET COMPRISING JUXTAPOSED COOKING BASKETS

(30) Priorité: 03.02.2006 FR 0600993
(43) Date de publication de la demande: 15.10.2008
(73) Titulaire: SEB S.A., 69132 Ecully (FR)
(72) Inventeur: DUMOUX, Philippe, F-21120 GEMEAUX (FR)
(74) Mandataire: Kiehl, Hubert
(86) Numéro de dépôt international: PCT/FR2007/000189
(87) Numéro de publication internationale: WO 2007/088281

(56) Documents cités:
- EP-A- 1 604 595
- US-A- 1 714 311

## Description

La présente invention concerne le domaine technique des appareils et des ustensiles de cuisson à la vapeur, ou cuiseurs vapeur.

Les cuiseurs vapeur comprennent usuellement un réservoir d'eau, un ou plusieurs éléments de cuisson prévus pour recevoir les aliments à cuire, et le cas échéant des moyens de chauffe pour la production de vapeur. Le réservoir d'eau peut être disposé dans une base de production de vapeur.

Les cuiseurs vapeur étagés comportent plusieurs éléments de cuisson à fond perforé empilés les uns sur les autres. Un cuiseur vapeur du type précité est connu du document FR 2 848 086. Usuellement un bac récupérateur de jus est disposé entre l'élément de cuisson inférieur et le réservoir d'eau de la base de production de vapeur. Cette disposition permet d'éviter de troubler l'eau du réservoir d'eau servant à la production de vapeur avec les jus s'écoulant du fond perforé des éléments de cuisson.

Toutefois, la construction précitée présente l'inconvénient d'une retombée des jus s'écoulant du ou des éléments de cuisson supérieurs sur les aliments de l'élément de cuisson inférieur. Un autre inconvénient de la construction précitée est la hauteur relativement importante du cuiseur vapeur, due à la présence de plusieurs éléments de cuisson superposés.

Un ensemble pour la cuisson à la vapeur selon le préambule de la revendication indépendante 1 est décrit dans le document EP-A-1 604 595.

Un objet de la présente invention est de proposer un ensemble pour la cuisson à la vapeur, permettant de cuire plusieurs aliments en évitant le mélange des jus provenant de certains aliments avec d'autres aliments.

Un autre objet de la présente invention est de proposer un ensemble pour la cuisson à la vapeur, présentant une construction simplifiée, permettant de cuire plusieurs aliments en limitant le transfert des arômes entre les aliments.

Un autre objet de la présente invention est de proposer un ensemble pour la cuisson à la vapeur, permettant de cuire plusieurs aliments tout en présentant une hauteur réduite.

Un autre objet de la présente invention est de proposer un ensemble pour la cuisson à la vapeur, permettant de cuire plusieurs aliments tout en présentant une manipulation simplifiée.

Ces objets sont atteints avec un ensemble pour la cuisson à la vapeur, prévu pour être disposé sur une base de production de vapeur, ledit ensemble pour la cuisson à la vapeur comportant un panier de cuisson ajouré disposé dans un élément de cuisson présentant une partie inférieure permettant le passage de la vapeur et une paroi latérale annulaire dégageant une ouverture supérieure, **caractérisé en ce qu**'un autre panier de cuisson ajouré est disposé dans l'élément de cuisson à côté du panier de cuisson. En d'autres termes, le panier de cuisson et l'autre panier de cuisson sont juxtaposés dans l'élément de cuisson, et non superposés l'un au dessus de l'autre. Cette disposition permet de cuire à la vapeur simultanément deux aliments dans le panier de cuisson d'une part et dans l'autre panier de cuisson d'autre part, sans que les jus de cuisson ne se mélangent aux aliments. Dans le cas ou la durée de cuisson des aliments placés dans le panier de cuisson et l'autre panier de cuisson est différente, la juxtaposition du panier de cuisson et de l'autre panier de cuisson dans le même élément de cuisson simplifie la réalisation de la cuisson. Par comparaison, dans un cuiseur vapeur étagé, la cuisson la plus rapide sera placée préférentiellement dans l'élément de cuisson supérieur si l'on souhaite limiter les manipulations. L'ensemble pour la cuisson à la vapeur peut être notamment placé entre une base de production de vapeur et un couvercle ou entre une base de production de vapeur et un autre élément de cuisson.

Avantageusement alors, l'élément de cuisson présente un fond perforé. L'élément de cuisson peut ainsi être utilisé directement pour cuire des aliments, notamment pour la cuisson d'aliments allongés. En alternative, l'élément de cuisson peut comporter seulement un ou plusieurs supports prévus chacun pour retenir le panier de cuisson et/ou l'autre panier de cuisson.

Selon une construction avantageuse, le fond perforé et la paroi latérale annulaire sont issus d'une même pièce. Cette disposition permet de réaliser un élément de cuisson présentant une construction très économique.

Avantageusement encore, la partie inférieure présente une conformation prévue pour recevoir le panier de cuisson et une autre conformation prévue pour recevoir l'autre panier de cuisson. Cette disposition permet de faciliter la mise en place du panier de cuisson et de l'autre panier de cuisson chargés d'aliments dans l'élément de cuisson. L'utilisateur sait précisément où loger le panier de cuisson et l'autre panier de cuisson dans l'élément de cuisson.

Avantageusement alors, la conformation et l'autre conformation forment chacune une dépression. Cette disposition permet de limiter le déplacement du panier de cuisson et de l'autre panier de cuisson sous l'effet de la vapeur.

Avantageusement encore, la paroi latérale annulaire définit une zone de réception prévue pour recevoir le panier de cuisson et une autre zone de réception prévue pour recevoir l'autre panier de cuisson. Cette disposition permet également de faciliter la mise en place du panier de cuisson et de l'autre panier de cuisson chargés d'aliments dans l'élément de cuisson. L'utilisateur sait précisément où loger le panier de cuisson et l'autre panier de cuisson dans l'élément de cuisson.

Avantageusement alors, un renfoncement latéral est ménagé sur toute la hauteur de la paroi latérale annulaire. Cette disposition permet de dégager un espace latéral par rapport à l'élément de cuisson, en limitant l'encombrement.

Avantageusement alors, le renfoncement latéral est ménagé entre la zone de réception et l'autre zone de réception. Cette disposition permet de limiter l'espace entre l'élément de cuisson, d'une part, et le panier de cuisson ou l'autre panier de cuisson, d'autre part, notamment lorsque la paroi latérale du panier de cuisson et/ou la paroi latérale de l'autre panier de cuisson n'est pas plane.

Ledit ensemble pour la cuisson à la vapeur peut notamment appartenir à un cuiseur vapeur électrique comprenant une base de production de vapeur comportant un réservoir d'eau et un dispositif de chauffe.

Avantageusement alors, la base de production de vapeur comporte au moins une sortie de vapeur disposée sous le panier de cuisson et au moins une autre sortie de vapeur disposée sous l'autre panier de cuisson. Cette disposition permet de garantir une bonne efficacité de cuisson pour les aliments placés dans le panier de cuisson et les aliments placés dans l'autre panier de cuisson. Cette disposition permet également de contribuer à limiter les transferts d'arômes entre les aliments placés dans le panier de cuisson et les aliments placés dans l'autre panier de cuisson, et vice-versa.

Avantageusement, ledit ensemble pour la cuisson à la vapeur appartient à un cuiseur vapeur électrique comprenant une base de production de vapeur comportant un réservoir d'eau, un dispositif de chauffe et des moyens de commande, ainsi qu'un élément de cuisson présentant une partie inférieure permettant le passage de la vapeur et une paroi latérale annulaire dégageant une ouverture supérieure, dans lequel la paroi latérale annulaire présente un renfoncement latéral, les moyens de commande étant agencés en dessous du renfoncement latéral. Cette disposition permet de réduire l'encombrement de l'appareil.

L'invention sera mieux comprise à l'étude d'un exemple de réalisation et d'une variante, pris à titre nullement limitatif, illustrés dans les figures annexées, dans lesquelles :
- la figure 1 est une vue en éclaté d'un exemple de réalisation d'un cuiseur vapeur comportant un ensemble pour la cuisson à la vapeur selon l'invention,
- la figure 2 est une vue en perspective du cuiseur vapeur illustré à la figure 1,
- la figure 3 est une vue en coupe transversale du cuiseur vapeur illustré aux figures 1 et 2,
- les figures 4 et 5 sont des vues en perspectives d'un élément de cuisson appartenant à l'ensemble pour la cuisson à la vapeur selon l'invention illustré aux figures 1 et 2,
- la figure 6 est une vue en perspective d'un panier de cuisson ajouré appartenant à l'ensemble pour la cuisson à la vapeur selon l'invention illustré aux figures 1 et 2.
- la figure 7 est une vue de dessus en perspective d'un élément supérieur de la base de production de vapeur du cuiseur vapeur illustré aux figures 1 à 3.

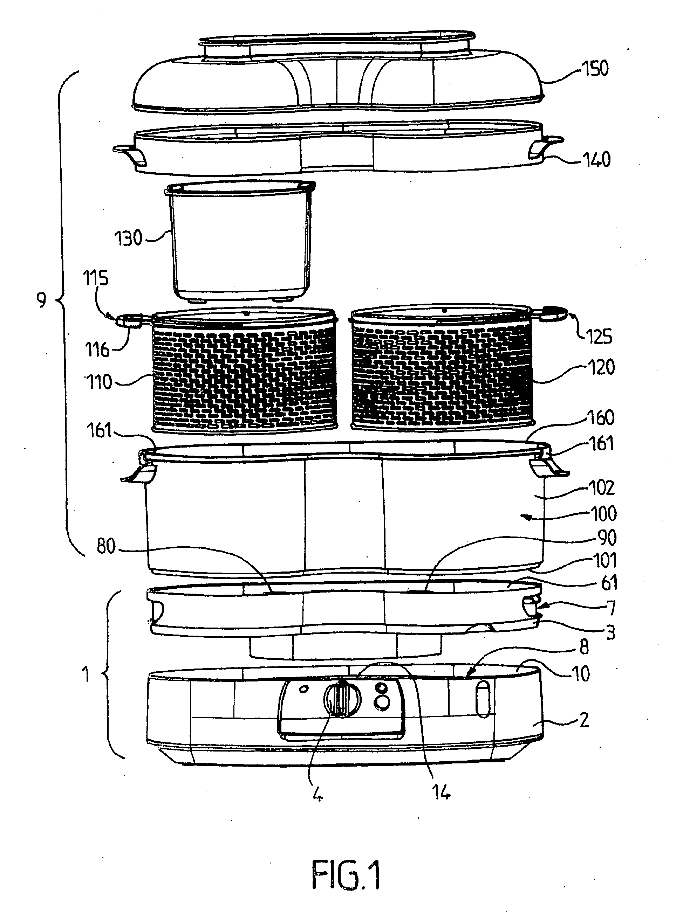

Les figures 1 à 3 montrent un cuiseur vapeur électrique comprenant une base de production de vapeur 1 et une enceinte de cuisson 9 alimentée en vapeur par la base de production de vapeur 1. L'enceinte de cuisson 9 est disposée sur la base de production de vapeur 1.

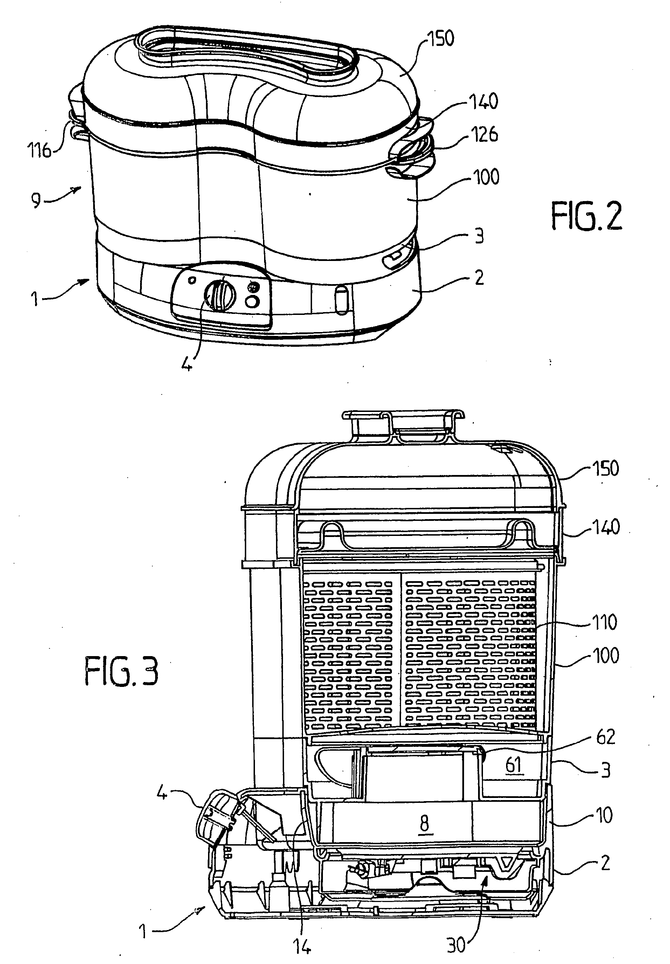

La base de production de vapeur 1 comporte un réservoir d'eau 8 et un dispositif de chauffe 30 (visibles sur la figure 3). Le réservoir d'eau 8 est constitué par un réceptacle 10 formé dans un élément inférieur 2 de la base de production de vapeur 1. L'élément inférieur 2 comporte des moyens de commande 4 prévus pour piloter le dispositif de chauffe 30, notamment pour régler le temps de cuisson et/ou le temps de maintien au chaud. Le réceptacle 10 comporte une paroi latérale comportant un bossage latéral interne 14. Les moyens de commande 4 sont agencés à l'extérieur du bossage latéral interne 14. La base de production de vapeur 1 comporte également un élément supérieur 3 agencé sur l'élément inférieur 2. L'élément supérieur 3 forme un bac récupérateur à jus 61. L'élément supérieur 3 présente un dispositif de remplissage 7.

L'enceinte de cuisson 9 comporte un élément de cuisson 100, disposé sur la base de production de vapeur 1, un panier de cuisson 110 disposé dans l'élément de cuisson 100, un autre panier de cuisson 120 disposé dans l'élément de cuisson 100 à côté du panier de cuisson 110, un bol à riz 130, disposé dans l'élément de cuisson 100 ou dans le panier de cuisson 110 ou dans l'autre panier de cuisson 120, un accessoire de cuisson 140, disposé au dessus de l'élément de cuisson 100, et un couvercle 150, disposé sur l'accessoire de cuisson 140 ou directement sur l'élément de cuisson 100.

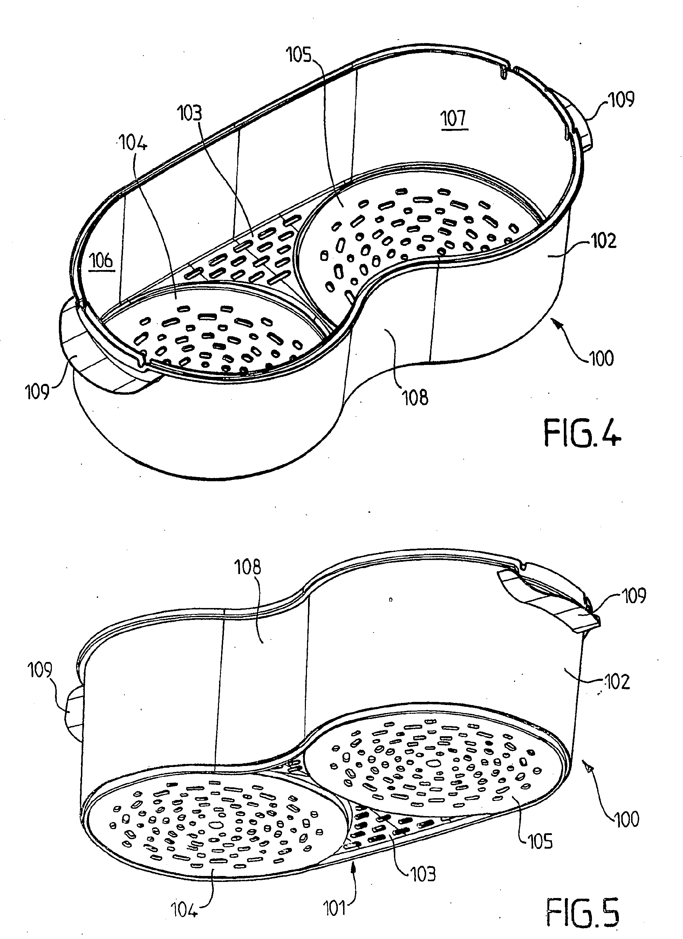

Tel que mieux visible sur les figures 4 et 5, l'élément de cuisson 100 présente une partie inférieure 101 permettant le passage de la vapeur et une paroi latérale annulaire 102 dégageant une ouverture supérieure. L'élément de cuisson 100 présente une géométrie allongée. Un organe de préhension 109 est disposé à chacune des extrémités de l'élément de cuisson 100.

L'élément de cuisson 100 comporte un fond perforé 103. Le fond perforé 103 et la paroi latérale annulaire 102 sont de préférence issus d'une même pièce, réalisée avantageusement en matière transparente ou translucide. A titre de variante, l'élément de cuisson 100 pourrait notamment comporter un fond perforé amovible.

La partie inférieure 101 présente une conformation 104 prévue pour recevoir le panier de cuisson 110 et une autre conformation 105 prévue pour recevoir l'autre panier de cuisson 120. La conformation 104 et l'autre conformation 105 forment chacune une dépression permettant de faciliter le positionnement du panier de cuisson 110 ou de l'autre panier de cuisson 120. La conformation 104 et l'autre conformation 105 sont ménagées dans le fond perforé 103.

La paroi latérale annulaire 102 définit une zone de réception 106 prévue pour recevoir le panier de cuisson 110 et une autre zone de réception 107 prévue pour recevoir l'autre panier de cuisson 120. La zone de réception 106 et l'autre zone de réception 107 sont adjacentes.

Un renfoncement latéral 108 est ménagé sur toute la hauteur de la paroi latérale annulaire 102. Le renfoncement latéral 108 est ménagé entre la zone de réception 106 et l'autre zone de réception 107.

Tel que visible sur les figures 1 à 3, les moyens de commande 4 sont agencés en dessous du renfoncement latéral 108.

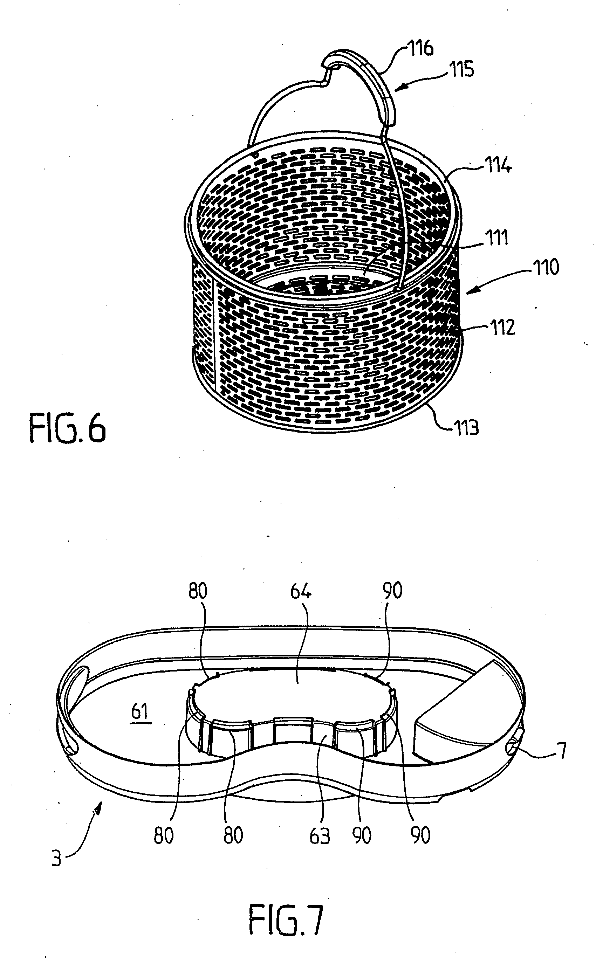

Le panier de cuisson 110, mieux visible sur la figure 6, et l'autre panier de cuisson 120, visible sur la figure 1, présentent avantageusement un positionnement interchangeable dans l'élément de cuisson 100, et sont avantageusement identiques. Le panier de cuisson 110 et l'autre panier de cuisson 120 sont ajourés.

Le panier de cuisson 110 comporte un fond 111 et une paroi latérale 112 avantageusement réalisés en tôle d'acier inoxydable perforée et assemblés par un surmoulage annulaire de matière plastique 113. Un autre surmoulage annulaire de matière plastique 114 est prévu sur le bord supérieur de la paroi latérale 112. A titre de variante, le fond 111 et la paroi latérale 112 peuvent notamment être assemblés par sertissage ; le bord supérieur de la paroi latérale 112 peut être retourné.

Un élément de préhension 115 est monté sur le panier de cuisson 110. Plus particulièrement, l'élément de préhension 115 est monté pivotant sur le panier de cuisson 110. L'élément de préhension 115 est par exemple réalisé en acier inoxydable.

L'élément de préhension 115 comporte un organe de préhension 116 agencé à l'extérieur de l'enceinte de cuisson 9 lorsque le panier de cuisson 110 est disposé dans l'élément de cuisson 100, tel que visible sur la figure 2. L'organe de préhension 116 peut notamment être réalisé en matière plastique, par exemple en polypropylène.

Un autre élément de préhension 125 est monté sur l'autre panier de cuisson 120. L'autre élément de préhension 125 est identique à l'élément de préhension 115.

De préférence, la base de production de vapeur 1 comporte au moins une sortie de vapeur 80 disposée sous le panier de cuisson 110 et au moins une autre sortie de vapeur 90 disposée sous l'autre panier de cuisson 120, tel qu'illustré à la figure 1.

Tel que montré à la figure 7, la base de production de vapeur 1 comporte plusieurs ouvertures de sortie de vapeur 80 et plusieurs autres sorties de vapeur 90, ménagées sur une cheminée 63 agencée dans le bac récupérateur à jus 61. La cheminée 63 présente un toit 64 prévu pour éviter des retombées dans le réceptacle 10.

La présente invention s'utilise de la manière suivante.

Le panier de cuisson 110 ajouré et l'autre panier de cuisson 120 ajouré forment avec l'élément de cuisson 100 un ensemble pour la cuisson à la vapeur permettant de réaliser des cuissons variées en limitant les mélanges de saveur. Le panier de cuisson 110 et l'autre panier de cuisson 120 sont juxtaposés dans l'élément de cuisson 100.

Les jus s'écoulant du panier de cuisson 110 ajouré ne peuvent atteindre l'autre panier de cuisson 120 ajouré, et vice versa. Les jus sont recueillis dans le bac récupérateur à jus 61.

Les arômes produits durant la cuisson sont en petite partie entraînés par la vapeur qui traverse les aliments verticalement à partir des sorties de vapeur 80 et s'échappe ensuite par le couvercle 150 de l'appareil. Les transferts d'arômes entre le panier de cuisson 110 et l'autre panier de cuisson 120 sont donc limités.

L'utilisateur peut aisément retirer le panier de cuisson 110 ou l'autre panier de cuisson 120 en utilisant les organes de préhension 116, 126.

Si désiré, l'utilisateur peut réaliser une cuisson dans l'élément de cuisson 100 en utilisant seulement le panier de cuisson 110 ou seulement l'autre panier de cuisson 120.

Le cuiseur vapeur électrique comportant la base de production de vapeur 1, l'élément de cuisson 100, le panier de cuisson 110 ajouré et l'autre panier de cuisson 120 ajouré présente une hauteur réduite tout en permettant des cuissons simultanées.

A titre de variante, l'élément de cuisson 100 pourrait comporter un ou plusieurs supports prévus chacun pour retenir le panier de cuisson 110 ajouré et/ou l'autre panier de cuisson 120 ajouré. Ledit ou lesdits supports peuvent ménager si désiré une ou plusieurs conformations prévues pour recevoir le panier de cuisson 110 ajouré et/ou l'autre panier de cuisson 120 ajouré.

A titre de variante, la base de production de vapeur 1 peut être dépourvue de bac récupérateur de jus.

A titre de variante, le panier de cuisson 110 et/ou l'autre panier de cuisson 120 ne présentent pas nécessairement une géométrie circulaire.

A titre de variante, l'élément de cuisson 100 pourrait loger plus de deux paniers de cuisson ajourés. Notamment, l'élément de cuisson 100 pourrait loger plus de deux paniers de cuisson ajourés disposés de manière alignée, ou plus de deux paniers de cuisson ajourés disposés selon une couronne.

La présente invention n'est nullement limitée à l'exemple de réalisation décrit et à ses variantes, mais englobe de nombreuses modifications dans le cadre des revendications.

## Revendications

1. Ensemble pour la cuisson à la vapeur, prévu pour être disposé sur une base de production de vapeur (1), ledit ensemble pour la cuisson à la vapeur comportant un panier de cuisson (110) ajouré disposé dans un élément de cuisson (100) présentant une partie inférieure (101) permettant le passage de la vapeur et une paroi latérale annulaire (102) dégageant une ouverture supérieure, **caractérisé en ce qu'**un autre panier de cuisson (120) ajouré est disposé dans l'élément de cuisson (100) à côté du panier de cuisson (110).

2. Ensemble pour la cuisson à la vapeur selon la revendication 1, **caractérisé en ce que** l'élément de cuisson (100) présente un fond perforé (103).

3. Ensemble pour la cuisson à la vapeur selon la revendication 2, **caractérisé en ce que** le fond perforé (103) et la paroi latérale annulaire (102) sont issus d'une même pièce.

4. Ensemble pour la cuisson à la vapeur selon l'une des revendications 1 à 3, **caractérisé en ce que** la partie inférieure (101) présente une conformation (104) prévue pour recevoir le panier de cuisson (110) et une autre conformation (105) prévue pour recevoir l'autre panier de cuisson (120).

5. Ensemble pour la cuisson à la vapeur selon la revendication 4, **caractérisé en ce que** la conformation (104) et l'autre conformation (105) forment chacune une dépression.

6. Ensemble pour la cuisson à la vapeur selon l'une des revendications 1 à 5, **caractérisé en ce que** la paroi latérale annulaire (102) définit une zone de réception (106) prévue pour recevoir le panier de cuisson (110) et une autre zone de réception (107) prévue pour recevoir l'autre panier de cuisson (120).

7. Ensemble pour la cuisson à la vapeur selon l'une des revendications 1 à 6, **caractérisé en ce qu'**un renfoncement latéral (108) est ménagé sur toute la hauteur de la paroi latérale annulaire (102).

8. Ensemble pour la cuisson à la vapeur selon la revendication 6, **caractérisé en ce qu'**un renfoncement latéral (108) est ménagé sur toute la hauteur de la paroi latérale annulaire (102) et **en ce que** le renfoncement latéral (108) est ménagé entre la zone de réception (106) et l'autre zone de réception (107).

9. Cuiseur vapeur électrique comprenant une base de production de vapeur (1) comportant un réservoir d'eau (8) et un dispositif de chauffe (30), ainsi qu'un élément de cuisson (100) présentant une partie inférieure (101) permettant le passage de la vapeur et une paroi latérale annulaire (102) dégageant une ouverture supérieure, **caractérisé en ce qu'**il comporte un panier de cuisson (110) ajouré et un autre panier de cuisson (120) ajouré formant avec l'élément de cuisson (100) un ensemble pour la cuisson à la vapeur selon l'une des revendications 1 à 8.

10. Cuiseur vapeur électrique selon la revendication 9, **caractérisé en ce que** la base de production de vapeur (1) comporte au moins une sortie de vapeur (80) disposée sous le panier de cuisson (110) et au moins une autre sortie de vapeur (90) disposée sous l'autre panier de cuisson (120).

11. Cuiseur vapeur électrique comprenant une base de production de vapeur (1) comportant un réservoir d'eau (8), un dispositif de chauffe (30) et des moyens de commande (4), ainsi qu'un élément de cuisson (100) présentant une partie inférieure (101) permettant le passage de la vapeur et une paroi latérale annulaire (102) dégageant une ouverture supérieure, **caractérisé en ce qu'**il comporte un panier de cuisson (110) ajouré et un autre panier de cuisson (120) ajouré formant avec l'élément de cuisson (100) un ensemble pour la cuisson à la vapeur selon l'une des revendications 7 ou 8, et **en ce que** les moyens de commande (4) sont agencés en dessous du renfoncement latéral (108).

## Claims

1. A steam cooking set designed to be disposed on a steam generator base (1), said steam cooking set comprising an openwork cooking basket (110) disposed in a cooking element (100) having a bottom portion (101) that enables steam to pass through it, and an annular side wall (102) defining a top opening, said steam cooking set being **characterized in that** another openwork cooking basket (120) is disposed in the cooking element (100) beside the cooking basket (110).

2. A steam cooking set according to claim 1, **characterized in that** the cooking element (100) has a perforated bottom (103).

3. A steam cooking set according to claim 2, **characterized in that** the perforated bottom (103) and the annular side wall (102) are formed integrally in one piece.

4. A steam cooking set according to any one of claims 1 to 3, **characterized in that** the bottom portion (101) has a shaped region (104) designed to receive the cooking basket (110) and another shaped region (105) designed to receive the other cooking basket (120).

5. A steam cooking set according to claim 4, **characterized in that** each of the shaped regions, namely the shaped region (104) and the other shaped region (105), forms a respective depression.

6. A steam cooking set according to any one of claims 1 to 5, **characterized in that** the annular side wall (102) defines a basket-receiving zone (106) designed to receive the cooking basket (110) and another basket-receiving zone (107) designed to receive the other cooking basket (120).

7. A steam cooking set according to any one of claims 1 to 6, **characterized in that** a side setback (108) is provided over the entire height of the annular side wall (102).

8. A steam cooking set according to claim 6, **characterized in that** a side setback (108) is provided over the entire height of the annular side wall (102), and **in that** the side setback (108) is provided between the basket-receiving zone (106) and the other basket-receiving zone (107).

9. An electric steam cooker comprising firstly a steam generator base (1) including a water reservoir (8) and a heater device (30), and secondly a cooking element (100) having a bottom portion (101) that enables steam to pass through it, and an annular side wall (102) defining a top opening, said electric steam cooker being **characterized in that** it further comprises an openwork cooking basket (110) and another openwork cooking basket (120) co-operating with the cooking element (100) to form a steam cooking set according to any one of claims 1 to 8.

10. An electric steam cooker according to claim 9, **characterized in that** the steam generator base (1) is provided with at least one steam outlet (80) disposed under the cooking basket (110) and with at least one other steam outlet (90) disposed under the other cooking basket (120).

11. An electric steam cooker comprising firstly a steam generator base (1) including a water reservoir (8), a heater device (30), and control means (4), and secondly a cooking element (100) having a bottom portion (101) that enables steam to pass through it, and an annular side wall (102) defining a top opening, said electric steam cooker being **characterized in that** it further comprises an openwork cooking basket (110) and another openwork cooking basket (120) co-operating with the cooking element (100) to form a steam cooking set according to claim 7 or claim 8, and **in that** the control means (4) are arranged below the side setback (108).

## Patentansprüche

1. Dampfgarbaugruppe, die dazu vorgesehen ist, auf einer Basis zum Erzeugen von Dampf (1) angeordnet zu sein, wobei die Dampfgarbaugruppe einen durchbrochenen Garkorb (110) aufweist, der in einem Garelement (100) angeordnet ist, das einen unteren Teil (101) aufweist, der den Durchtritt von Dampf erlaubt, und eine ringförmige Seitenwand (102), die eine obere Öffnung freigibt, **dadurch gekennzeichnet, dass** ein weiterer durchbrochener Garkorb(120) im Garelement (100) neben dem Garkorb (110) angeordnet ist.

2. Dampfgarbaugruppe nach Anspruch 1, **dadurch gekennzeichnet, dass** das Garelement (100) einen gelochten Boden (103) aufweist.

3. Dampfgarbaugruppe nach Anspruch 2, **dadurch gekennzeichnet, dass** der gelochte Boden (103) und die ringförmige Seitenwand (102) aus demselben Teil hervorgehen.

4. Dampfgarbaugruppe nach einem der Ansprüche 1 bis 3, **dadurch gekennzeichnet, dass** der untere Teil (101) eine Anformung (104) aufweist, die dazu vorgesehen ist, den Garkorb (110) aufzunehmen, und eine weitere Anformung (105), die dazu vorgesehen ist, den weiteren Garkorb (120) aufzunehmen.

5. Dampfgarbaugruppe nach Anspruch 4, **dadurch gekennzeichnet, dass** die Anformung (104) und die weitere Anformung (105) jeweils eine Vertiefung bilden.

6. Dampfgarbaugruppe nach einem der Ansprüche 1 bis 5, **dadurch gekennzeichnet, dass** die ringförmige Seitenwand (102) einen Aufnahmebereich (106) definiert, der dazu vorgesehen ist, den Garkorb (110) aufzunehmen, und einen weiteren Aufnahmebereich (107), der dazu vorgesehen ist, den weiteren Garkorb (120) aufzunehmen.

7. Dampfgarbaugruppe nach einem der Ansprüche 1 bis 6, **dadurch gekennzeichnet, dass** ein seitlicher Rücksprung (108) auf der gesamten Höhe der ringförmigen Seitenwand (102) angebracht ist.

8. Dampfgarbaugruppe nach Anspruch 6, **dadurch gekennzeichnet, dass** ein seitlicher Rücksprung (108) auf der gesamten Höhe der ringförmigen Seitenwand (102) angebracht ist und dass der seitliche Rücksprung (108) zwischen dem Aufnahmebereich (106) und dem weiteren Aufnahmebereich (107) angebracht ist.

9. Elektrischer Dampfgarer mit einer Basis zum Erzeugen von Dampf (1), der einen Wasserbehälter (8) und eine Heizvorrichtung (30) sowie ein Garelement (100) umfasst, das einen unteren Teil (101) aufweist, der den Durchtritt des Dampfes erlaubt, und eine ringförmige Seitenwand (102), die eine obere Öffnung freigibt, **dadurch gekennzeichnet, dass** er einen durchbrochenen Garkorb (110) und einen weiteren durchbrochenen Garkorb (120) aufweist, die mit dem Garelement (100) eine Dampfgarbaugruppe nach einem der Ansprüche 1 bis 8 bilden.

10. Elektrischer Dampfgarer nach Anspruch 9, **dadurch gekennzeichnet, dass** die Basis zum Erzeugen von Dampf (1) mindestens einen Dampfaustritt (80) aufweist, der unterhalb des Garkorbs (110) angeordnet ist, und mindestens einen weiteren Dampfaustritt (90), der unterhalb des weiteren Garkorbs (120) angeordnet ist.

11. Elektrischer Dampfgarer mit einer Basis zum Erzeugen von Dampf (1), der einen Wasserbehälter (8), eine Heizvorrichtung (30) und Steuermittel (4), sowie ein Garelement (100) umfasst, das einen unteren Teil (101) aufweist, der den Durchtritt des Dampfes erlaubt, und eine ringförmige Seitenwand (102), die eine obere Öffnung freigibt, **dadurch gekennzeichnet, dass** er einen durchbrochenen Garkorb (110) und einen weiteren durchbrochenen Garkorb (120) aufweist, die mit dem Garelement (100) eine Dampfgarbaugruppe nach einem der Ansprüche 7 oder 8 bilden, und dass die Steuermittel (4) unterhalb des seitlichen Rücksprungs (108) angeordnet sind.
